Europäisches Patentamt

European Patent Office

Office européen des brevets

(19)

(11) Veröffentlichungsnummer : **0 014 739**
**B1**

(12) **EUROPÄISCHE PATENTSCHRIFT**

(45) Veröffentlichungstag der Patentschrift :
03.08.83

(51) Int. Cl.³ : **B 29 H 17/36**

(21) Anmeldenummer : **79104251.8**

(22) Anmeldetag : **31.10.79**

(54) **Laufstreifen für Kraftfahrzeugreifen und Verfahren zu seiner Herstellung und Verwendung.**

(30) Priorität : **10.02.79 DE 2905136**

(43) Veröffentlichungstag der Anmeldung :
**03.09.80 Patentblatt 80/18**

(45) Bekanntmachung des Hinweises auf die Patenterteilung : **03.08.83 Patentblatt 83/31**

(84) Benannte Vertragsstaaten :
**AT BE CH FR GB IT LU NL SE**

(56) Entgegenhaltungen :
DE A 1 579 167
DE B 1 262 584
FR A 2 285 991
US A 1 611 400
US A 1 690 514
US A 2 067 667
US A 2 395 668
US A 3 970 131

Mercury Dictionary of Textile Terms, 1951, Manchester, GB, « Hollands », Seite 267

(73) Patentinhaber : **PETER-BTR Gummiwerke Aktiengesellschaft**
**D-6450 Hanau 8 (DE)**

(72) Erfinder : **Thies, Peter**
**Mittelbeune 39**
**D-6453 Seligenstadt 1 (DE)**
Erfinder : **Loose, Gerhard**
**Huttenstrasse 22**
**D-6450 Hanau 7 (DE)**

(74) Vertreter : **Keil, Rainer A., Dr. Dipl.-Phys.**
**Patentanwälte MERTENS & KEIL Ammelburgstrasse 34**
**D-6000 Frankfurt am Main 1 (DE)**

EP 0 014 739 B1

Laufstreifen für Kraftfahrzeugreifen und Verfahren zu seiner Herstellung und Verwendung

Die Erfindung betrifft einen Laufstreifen nach dem Gattungsbegriff des Anspruchs 1.

Die Hersteller solcher Laufstreifen sind üblicherweise andere als diejenigen, die die Laufstreifen auf die Karkasse der zu erneuernden Kraftfahrzeugreifen aufbringen. Die Reifenerneuerer müssen daher immer eine Anzahl von Laufstreifen auf Lager halten.

Die Laufstreifenhersteller haben bisher, insbesondere um die Oberfläche der Verbindungsfläche zu vergrößern und damit die Verankerung des Laufstreifens auf der Karkasse durch Vulkanisation zu verbessern, unmittelbar nach Herstellung des Laufstreifens die dem Profil abgewandte Seite des Laufstreifens mit Hilfe einer Schleifmaschine aufgerauht. Die so durch Aufrauhen vorbereiteten Laufstreifen wurden vom Hersteller z. B. in Folie verpackt und an die Reifenerneuerer geliefert und dort auf Lager gehalten. Dabei kann es trotz der Verpackung zur Verschmutzung und Oxidation der der Karkasse zugewandten Verbindungsfläche des Laufstreifens kommen. Außerdem können bei der Lagerung Bestandteile aus dem Inneren des Laufstreifengummis an die Verbindungsfläche wandern. Hierdurch wird ein gutes Aufvulkanisieren des Laufstreifens auf die Karkasse beeinträchtigt. Außerdem ist die Aufrauharbeit sehr mühselig und zeitaufwendig. Sie bringt auch die Gefahr der ungleichmäßigen Oberflächenaufrauhung mit sich, was dazu führt, daß der Laufstreifen ungleichmäßig fest auf der Karkasse gehalten wird.

Um hier Abhilfe zu schaffen, ist nach der DE-U- 76 18 482 vorgeschlagen worden, die Aufrauhung der Verbindungsfläche des Laufstreifens bereits beim Ausformen des Laufstreifens in der Preßform auszubilden und die Oberflächenoxidation durch luftdichtes Aufpressen einer Schutzfolie, die kurz vor dem Aufbringen des Laufstreifens auf die Karkasse von Hand abgezogen werden kann, zu vermeiden. Bei diesem Verfahren ergibt sich jedoch an der Oberfläche der Verbindungsfläche des Laufstreifens eine sogenannte Preßhaut, die einem guten Aufvulkanisieren des Laufstreifens auf die Karkasse abträglich ist. Bei dem bekannten Vorschlag ist es ferner nicht möglich zu erreichen, daß die Schutzfolie bis in alle Vertiefungen der Verbindungsfläche dicht anliegt. Eine Oberflächenoxidation und die Wanderung der einer Vulkanisation abträglichen Gummibestandteile an die Oberfläche kann also nicht vollständig ausgeschlossen werden. Es besteht auch die Gefahr, daß die Schutzfolie, die relativ dünn sein muß, beim Transport der Laufstreifen vom Hersteller zum Verbraucher und der sonstigen Handhabung beschädigt wird.

Es ist auch schon die Möglichkeit in Erwägung gezogen worden, (vgl. DE-U- 76 18 482, Seite 3, Abs. 2) bei der Herstellung des Laufstreifens auf der der Karkasse zuzuwendenden Seite des Laufstreifens ein Gewebe aufzuvulkanisieren, welches unmittelbar nach der Herstellung des Laufstreifens auf die Karkasse zur Freilegung einer aufgerauhten Verbindungsfläche abgerissen wird. Hierdurch soll das oben geschilderte bisher durch Schleifen vorgenommene Aufrauhen ersetzt werden. Die Nachteile der nachträglichen Verschmutzung und sonstige Oberflächenbeeinträchtigungen bleiben jedoch wie beim Schleifen. Von der Verwendung eines Gewebes wurde von der Fachwelt außerdem — so auch dort — eindringlich abgeraten, da für das Gewebe eine zu große Abreißkraft bei zu geringer Rauhtiefe erforderlich und insbesondere für den Reifenerneuerer die Abreißarbeit wegen ungleichmäßigen Abreißens zu mühselig und zeitaufwendig sei.

Die FR-A- 2 285 991 zeigt und beschreibt einen Laufstreifen der im Oberbegriff des Anspruchs 1 genannten Art. Ein brauchbares Gewebe ist darin nicht vorgeschlagen.

Aus der US-A- 1 690 514 ist es an sich bekannt, ein sogenanntes Holland-Gewebe auf die Unterseite eines unvulkanisierten Laufstreifens zur Vermeidung von Verschmutzungen und Oxidation anzudrücken. Beim Abziehen des Gewebes entsteht keine rauhe Oberfläche. Holland-Gewebe kann nach « The Mercury Dictionary of Textile Terms », 1951, Manchester, Seite 267, 64 Kettfäden und 60 Schußfäden pro inch aufweisen.

Aufgabe der vorliegenden Erfindung ist es, den Laufstreifen der gattungsgemäßen Art dahingehend weiterzubilden, daß für das Abreißen des als Schutzgewebe wirkenden Gewebes eine hinreichend geringe Kraft ausreicht und gleichwohl eine hinreichende Oberflächenvergrößerung der Verbindungsfläche des Laufstreifens erzielbar ist.

Gemäß dem kennzeichnenden Teil des Anspruchs 1 besteht die erfindungsgemäße Lösung dieser Aufgabe in der Auswahl und der Verwendung eines besonderen Gewebes als Schutzgewebe. Die Anforderungen, die an ein solches Gewebe gestellt sind, widersprechen einander : Einmal soll eine möglichst große Oberflächenvergrößerung auf der Verbindungsfläche eintreten, was jedoch zu einer übermäßig großen Abreißkraft führt ; zum anderen soll die Abreißkraft möglichst niedrig sein, deswegen aber das Gewebe so ausgebildet sein muß, daß die Oberflächenvergrößerung der Verbindungsfläche nicht ausreicht. Mit der Auswahl eines Schutzgewebes nach der Erfindung ist es gelungen, diesen beiden widerstreitenden Anforderungen in optimaler Weise gerecht zu werden. Durch die Verwendung eines leicht abreißbaren Schutzgewebes der erfindungsgemäßen Art kann dieses bis unmittelbar vor dem Aufbringen des Laufstreifens auf die Karkasse an dem Laufstreifen verbleiben. Das Abreißen erfolgt erst beim Reifenerneuerer. Oberflächenoxidation und Verschmutzung des Laufstreifens beim Transport und der Lagerung sind nicht mehr schädlich, da beide Einflüsse mit dem Abreißen des mit der Kautschukmischung durchdrungenen Schutzgewebes beseitigt werden. In gleicher Weise verschwinden auch die an die Oberfläche des Laufstreifens aus der Mischung gewanderten Bestandteile, die das Aufvulkanisieren des Laufstreifens auf die Karkasse beeinträchtigen könnten, unmittelbar vor der Verwendung des Laufstreifens. Das erfindungsgemäße Gewebe kann daher bis zuletzt seine Schutzfunktion ausüben. Es hat sich auch gezeigt, daß sich die bei Verwendung des erfindungsgemäßen Schutzgewebes frisch gerissene Verbindungsfläche aufgrund der besonderen Oberflächenstruktur besonders für das Aufvulkanisieren des Laufstreifens auf die Karkasse eignet. Bei dem Abreißen der in das Gewebe eingedrungenen Gummischicht zusammen mit dem erfindungsgemäßen Schutzgewebe entstehen nämlich, wie nähere Untersuchungen gezeigt haben, insbesondere zwischen den Kreuzpunkten der Gewebefäden zerklüftete Gummibrüche unter Bildung pilzförmiger Stümpfe, welche die Verankerungsfähigkeit der Verbindungsfläche auf der Karkasse besonders günstig beeinflussen. Die Abreißkräfte liegen bei Verwendung des erfindungsgemäßen Schutzgewebes zwischen 0,5 und 20 N/cm, vorzugsweise zwischen 1 und 3 N/cm, so daß das Schutzgewebe ohne weiteres von Hand abgerissen werden kann. Gleichwohl entsteht aufgrund der zuvor geschilderten Umstände eine hinreichend große Oberflächenvergrößerung. Das erfindungsgemäß verwendete Schutzgewebe ist auch so beschaffen, daß die Kautschukmischung beim Eingießen in die Preßform gut durch das Schutzgewebe unter Bildung einer geschlossenen Gummihaut auf der Rückseite des Schutzgewebes hindurchdringt, so daß sich später die zuvor erwähnten Gummibrüche bilden. Dieser Effekt wirkt sich damit vorteilhaft auf die für eine gute Verschweißung von Laufstreifen und Karkasse benötigte Oberflächenstrukturierung aus. Dabei werden auch eventuell im Schutzgewebe enthaltene Stoffe, die einer guten Verschweißung abträglich sein könnten, mit dem Durchdringen der Kautschukmischung durch das Schutzgewebe von dieser aufgenommen und aus der Verschweißebene entfernt. Mit der erfindungsgemäßen Auswahl eines besonderen Schutzgewebes ist es damit auf überraschend einfache Weise gelungen, trotz des bisher bestehenden allgemeinen Vorurteils der Fachwelt einen Laufstreifen mit abreißbarem Schutzgewebe zu schaffen, bei welchem die Abreißkräfte nicht zu hoch, gleichwohl aber die Oberflächenvergrößerung der Verbindungsfläche und die Verbindungseigenschaften der Verbindungsfläche außerordentlich gut sind und die für die Haltbarkeit durch einwandfreie Verschweißung mit dem Bindegummi auf der Karkasse gefertigte Verbindungsfläche bis unmittelbar vor dem Aufbringen des Laufstreifens von dem fest mit der Verbindungsfläche haftenden Gewebe geschützt wird.

Mit der kombinatorischen Benutzung von Merkmalen des Anspruchs 2 kann einerseits ein relativ feines Schutzgewebe, welches leicht von dem Laufstreifen abreißbar ist, verwendet werden, während andererseits die Unebenheiten relativ groß und daher relativ einfach beim Herstellen des Laufstreifens in der Preßform einformbar sein können. Zu den zuvor bereits geschilderten Vorteilen kommt bei dieser besonderen Ausführungsform der Erfindung der Vorteil, daß nach dem Abreißen des zunächst den in die Fläche eingeformten Unebenheiten folgenden Schutzgewebes die rauhe Verbindungsfläche sowohl durch die beim Pressen des Laufstreifens vorgeformten relativ großen Unebenheiten an sich bekannter Art, als auch die feinstrukturierten Unebenheiten, die beim Abreißen des Gewebes entstehen, bestimmt wird. Für die Gestalt der eingeformten Unebenheiten stehen u. a. alle aus der DE-U- 76 18 482 vorgeschlagenen Variationsmöglichkeiten zur Verfügung.

Nach Anspruch 3 ist ein Verfahren zur Herstellung eines erfindungsgemäßen Laufstreifens vorgeschlagen, bei welchem ein Arbeitsgang für das Aufvulkanisieren des Gewebes und das Einformen der Unebenheiten ausreicht.

Das bei der Erfindung zu verwendende Schutzgewebe ist ersichtlich außerordentlich fein. Es ist darum unter Umständen schwierig, den Gewebestreifen vollständig von dem Laufstreifen abzureißen, wenn insbesondere in den Randbereichen einzelne Fäden oder Gewebestücke auf der Verbindungsfläche des Laufstreifens hängenbleiben, die dann noch einzeln abgezogen werden müssen, was zu unerwünschter Mehrarbeit und Verzögerung führt. Um auch dieses Problem zu beseitigen, wird der erfindungsgemäße Laufstreifen vorzugsweise gemäß Anspruch 4 hergestellt. Das Schutzgewebe und auch der Austrieb des vulkanisierten Laufstreifenmaterials müssen an den Längskanten des Laufstreifens ohnehin abgeschnitten werden, nachdem der Laufstreifen vulkanisiert ist. Wenn man dieses Abschneiden mit einem erhitzten Messer vornimmt, tritt ein Verschweißen der Fäden des Schutzgewebes an dessen Längskanten ein, so daß sich der Gewebestreifen leicht, einwandfrei und vollständig von dem Laufstreifen abreißen läßt.

Eine besondere Art der Verwendung des erfindungsgemäßen Laufstreifens ist nach Anspruch 5 vorgesehen, wenn entweder die Abreißkräfte an der oberen Grenze, die von Hand noch bewältigt werden kann, oder darüber liegen, oder wenn die ständige Abreißarbeit von Hand erleichtert werden soll.

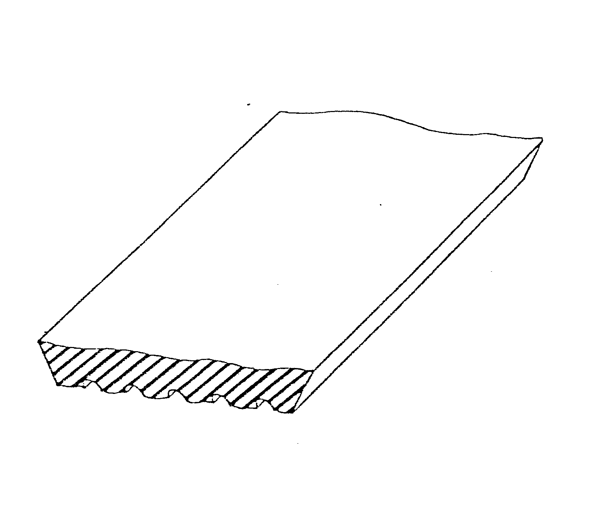

In der beiliegenden Zeichnung ist ein Abschnitt eines erfindungsgemäßen Laufstreifens nach dem Abreißen des Gewebestreifens ohne besonders in die das Schutzgewebe tragende Fläche eingeformte Unebenheiten und mit nach oben gekehrter Verbindungsfläche schematisch veranschaulicht.

**Ansprüche**

1. Laufstreifen aus Gummi, insbesondere für die Erneuerung eines Kraftfahrzeugreifens, welcher Laufstreifen auf der dem Profil abgewandten Fläche ein Gewebe aus synthetischem Kunststoff aufvulkanisiert trägt, welches kurz vor dem Aufbringen des Laufstreifens auf die Karkasse abreißbar ist, um auf der der Karkasse zugewandten Seite eine rauhe Verbindungsfläche freizulegen, dadurch gekennzeichnet, daß das Gewebe, vorzugsweise Kreuzgewebe, als Schutzgewebe folgende Eigenschaften hat :

   a) Grundmaterial : Polyester und/oder Polyamid,

   b) Fadenfeinheit : zwischen 60 und 240 dtex, vorzugsweise 67 und 140 dtex, und

   c) Fadendichte : in Kettrichtung und in Schußrichtung jeweils zwischen 45 und 25 Fäden/cm, vorzugsweise 36 und 28 Fäden/cm.

2. Laufstreifen nach Anspruch 1, dadurch gekennzeichnet, daß die das Schutzgewebe tragende Fläche des Laufstreifens Unebenheiten aufweist, die dem Negativ eines diese Fläche bildenden Teils der Profilform entspricht.

3. Verfahren zur Herstellung eines Laufstreifens nach Anspruch 2, dadurch gekennzeichnet, daß man während des Aufvulkanisierens des Schutzgewebes die Unebenheiten in die das Schutzgewebe tragende Fläche zusammen mit dem Einformen des Laufstreifenprofils, einformt.

4. Verfahren nach Anspruch 3, dadurch gekennzeichnet, daß man die Gewebelängskanten, vorzugsweise zusammen mit dem Austrieb des vulkanisierten Laufstreifenmaterials, mit einem Schneidmesser beschneidet, welches auf eine Temperatur oberhalb des Schmelzpunktes von Polyester und/oder Polyamid, also z. B. etwa 250 bis 400 °C erhitzt ist.

5. Verfahren zur Verwendung eines Laufstreifens nach Anspruch 1 oder 2, dadurch gekennzeichnet, daß man das Schutzgewebe kurz vor dem Aufbringen des Laufstreifens auf die Karkasse mittels einer auf dem Laufstreifen abwälzbaren Rolle abreißt, in welcher ein Ende des Gewebestreifens einspannbar ist.

## Claims

1. A tread of rubber, especially for reconditioning a motor vehicle tyre, which tread, on the side facing away from the profile, carries a fabric of synthetic material vulcanized thereupon that immediately prior to the application of the tread to the carcass is adapted to be broken off in order to expose a rough face of connection on the side facing the carcass, characterized in that the fabric, preferably latticed fabric, forming a protective cloth, exhibits the following properties :

   a) basic material : polyester and/or polyamide,

   b) thread titer : between 60 and 240 dtex, preferably 67 and 140 dtex, and

   c) sett : in warp and fill respectively between 45 and 25 threads/cm, preferably 36 and 28 threads/cm.

2. A tread according to claim 1, characterized in that the face of the tread carrying the protective fabric has unevennesses corresponding to the negative of a part of said profile forming the said face.

3. A process for the production of a tread according to claim 2, characterized in that during vulcanizing the said protective fabric onto the tread the unevennesses are moulded into the face carrying the protective fabric, along with the moulding of the tread profile.

4. A process according to claim 3, characterized in that the longitudinal edges of the fabric, preferably along with the flash of the vulcanized tread material, is trimmed with a cutting knife heated to a temperature above the melting point of polyester and/or polyamide, i. e. to about between 250 and 400 °C.

5. A process for use of a tread according to claims 1 or 2, characterized in that the said protective fabric immediately prior to the application of the tread to the carcass is broken off by means of a roll adapted to be rolled on said tread in which roll an end of the fabric strip is adapted to be clamped.

## Revendications

1. Une bande de roulement de gomme, spécialement pour le renouvellement d'un bandage de véhicule automobile, la bande de roulement portant un tissu de matière synthétique vulcanisé sur la surface détournée du profil, le tissu étant rompu peu avant la mise en place de la bande de roulement sur la carcasse pour exposer une surface de raccordement âpre sur le côté en face de la carcasse, caractérisée par le fait que le tissu, préférablement un tissu à plis croisé, étant un tissu de protection, comporte des qualités suivantes :

   a) matière de base : polyester et/ou polyamide,

   b) titre de fils : entre 60 et 240 dtex, préférablement 67 et 140 dtex, et

   c) serré : chaîne et trame entre 45 et 25 fils/cm, préférablement 36 et 28 fils/cm.

2. Une bande de roulement selon la revendication 1, caractérisée par le fait que la surface de la bande de roulement portant le tissu de protection, comporte des talons correspondant au négatif d'une part de la forme du profil formant la surface.

3. Un procédé pour fabriquer une bande de roulement selon la revendication 2, caractérisé par le fait qu'on forme les talons pendant la vulcanisation du tissu de protection sur la bande de roulement dans la surface portant le tissu de protection avec formation du profil de la bande de roulement.

4. Un procédé selon la revendication 3, caractérisé par le fait qu'on coupe les arêtes longitudinales du tissu, préférablement avec la toile de la matière de la bande de roulement vulcanisée par un couteau échauffé à une température au-dessus du point de fusion de polyester et/ou polyamide, c'est-à-dire à environ 250 à 400 °C.

5. Un procédé pour l'utilisation d'une bande de roulement selon les revendications 1 ou 2, caractérisé par le fait, qu'on rompt le tissu de protection peu avant la mise en place de la bande de roulement sur la carcasse par l'intermédiaire d'un rouleau à rouler sur la bande de roulement dans lequel est serrée une extrémité de la bande de tissu.